# EUROPÄISCHE PATENTSCHRIFT

(11) **EP 0 571 817 B1**
(45) Veröffentlichungstag und Bekanntmachung des Hinweises auf die Patenterteilung: **31.07.1996**
(21) Anmeldenummer: 93107697.0
(22) Anmeldetag: 12.05.1993
(51) Int. Cl.: C08L 23/02, C08L 23/04, C08L 23/10

(54) **Thermoplastische Formmassen**
Thermoplastic moulding compositions
Composition à mouler thermoplastique

(30) Priorität: 27.05.1992 DE 4217470
(43) Veröffentlichungstag der Anmeldung: 01.12.1993
(73) Patentinhaber: Buna Sow Leuna Olefinverbund GmbH, D-06258 Schkopau (DE)
(72) Erfinder: Gerecke, Jochen, Dr., O-4090 Halle (DE); Gruber, Klaus, O-4020 Halle (DE); Häussler, Lutz, Dr., O-4090 Halle (DE); Nagel, Marion, O-4200 Merseburg (DE); Zimmermann, Jürgen, Dr., O-4020 Halle (DE); Thiele, Klaus, Dr., W-3200 Hildesheim (DE); Wulff, Dirk, Dr., O-4090 Halle (DE)

(56) Entgegenhaltungen:
- EP-A- 0 480 698
- FR-A- 2 387 169
- GB-A- 2 053 238
- US-H- 1 022

## Beschreibung

Die Erfindung betrifft eine thermoplastische Formmasse, enthaltend, jeweils bezogen auf die Formmasse aus A + B + C,
A 30 bis 90 Massenteile Polyolefin aus der Reihe der Ethylen- und/oder Propylenhomopolymeren sowie der aus überwiegend Ethylen- und/oder Propylenmonomereinheiten aufgebauten Co- und Terpolymeren,
B 8 bis 60 Massenteile Styrenpolymerisat aus der Reihe der Styrenhomo- und/oder -mischpolymeren, einschließlich Styrenpfropfpolymeren unter Verwendung von kautschukartigen Rückgratmaterialien, und/oder Styrenpolymer/Kautschuk-Compounds und
C 2 bis 30 Massenteile eines durch anionische Lösungspolymerisation hergestellten und gegebenenfalls selektiv hydrierten Styren-Dien-Blockcopolymeren, das aus 10 bis 90 Masse-% Styren - und 90 bis 10 Masse-% Dieneinheiten aufgebaut und zusätzlich durch Pfropfung funktionalisiert worden ist.

Durch Kombination von Polystyren (PS) oder schlagzähem PS (HIPS) auf Basis von Mischungen aus PS und Dienkautschuken (BR, SBR) bzw. durch Pfropfung von Styren auf BR oder SBR erhaltenem HIPS oder einem aus überwiegend Styreneinheiten bestehenden Mischpolymeren (SAN, ABS, MBS, MABS) und Polyolefinen, insbesondere Polyethylenen (HDPE, LDPE, LLDPE) oder Polypropylenen (PP) oder Ethylen-Propylen-Co- bzw. -Terpolymeren (EPM, EPDM), können Polymercompounds mit einem gegenüber beiden Einzelkomponenten sich gegenseitig vorteilhaft ergänzenden Eigenschaftsprofil erhalten werden (H. Hönl, Kunststoffe 80 (1990) 6, 706).

Als Hauptanwendungsgebiet hat sich der Verpackungssektor herausgestellt. Aber erst durch den Zusatz von Verträglichkeitsvermittlern kann die Unverträglichkeit zwischen der Styren- und der Olefinpolymerkomponente weitestgehend ausgeschaltet und ein insgesamt gegenüber den Einzelkomponenten verbessertes Eigenschaftsspektrum erhalten werden.

Dank der Verwendung von "maßgeschneiderten" polymeren Emulgatoren, insbesondere auf der Grundlage bekannter in vielen Fällen selektiv hydrierter Styren-Dien- Blockcopolymerisate, können die für die notwendigen mechanischen Eigenschaften erforderlichen Morphologien eingestellt werden. (R. Fayt, R. Jerome u. Ph. Teyssie, Polym. Eng. Sci 27 (1987) , 5; ebenda, Makromol. Chem., Macromol. Symp. 16 (1988) , 41; ebenda, Makromol. Chem. 187 (1986), 837; A. P. Plochocki u.a., Kunststoffe 78 (1988) 3, 254).

Dafür steht eine breite Palette an Blockcopolymeren zur Verfügung. Neben der Verwendung von linearen Styren-Dien (Butadien und/oder Isopren) - Zweiblock - (SB, SI) und Styren-Butadien/oder Isopren-Styren-Dreiblockcopolymeren (SBS, SIS) mit einem in relativ weiten Grenzen variierbaren Gehalt an Styreneinheiten von 10 bis 90 % PS (EP 0042153, EP 0289926, DE 4001159, JP 59.05748, JP 58.197 049, JP 60.107 317, JP 89.087 645, JP 90.138 350, JP 01.090 248) werden auch radiale Styren-Dien-Blockcopolymere, auch als verzweigte oder Sternblockcopolymere bezeichnet, mit mittleren Sternastzahlen von 3 bis 12, zur Verbesserung der Eigenschaften von Polyolefin/ Styrenpolymer (PO/PS)-Blends eingesetzt (EP 0289 926, EP 0310 051, DE-OS 3643 008; FR 2.626 281, US 4518 681).

Dabei können Zusammensetzung, d.h. das Massenverhältnis aus Polystyren- und Polydienanteil, und der Segmentaufbau, insbesondere Zahl der Blöcke - entweder in Form scharf getrennter Blöcke oder mit "verschmierten" Übergängen zwischen den Blöcken (tapered copolymer blocks) - entsprechend den speziellen Blockcopolymersynthesebedingungen breit variieren.

Bevorzugt als Haft- bzw. Verträglichkeitsvermittler (interfacial agents) in PO/PS-Blends werden selektiv hydrierte Styren-Dien-Blockcopolymere verwendet.

Zum Einsatz gelangen hydrierte Styren-Butadien/oder Isopren-Zweiblockcopolymere S-HB(bzw. S-EB bei einer überwiegenden Sättigung der ethylenisch ungesättigten Bindungen in den konjugierten Polydienblöcken mit Ethen/Buten-Kautschukblöcken) oder S-HI (bzw. SEP bei überwiegender Sättigung entsprechend mit Ethen/Propen-Kautschukblöcken) (DE-AS 2.061 361, US 4.503 187; JP 01.190 741, JP 02.047 145, JP 01.174 550; R. Fayt u. Ph. Teyssie, Polym. Eng. Sci. 30 (1990) 10, 937) oder hydrierte Styren-Dien-Dreiblockcopolymere, insbesondere vom Typ S-EB-S oder S-EP-S (US 4.560 727, US 4.716.201, US 4.579 912, EP 0362 660, DE-OS 3.620 008; JP 60.107 317, JP 01.009 256).

Außer den zahlreichen Verwendungsmöglichkeiten von Styren-(unhydrierte oder selektiv hydrierte) Dien-Blockcopolymeren sowie auch von statistischen Olefin- und/oder Styrencopolymeren mit einpolymerisierten funktionellen Comonomeren, einschließlich Kombinationen aus beiden Copolymerarten, wie z. B. solche aus Ethylen-Vinylacetat-Copolymeren (EVA) und SBS (JP 60.158 235, JP 62.169 879), sind als Verträglichkeitsvermittler spezielle Pfropfcopolymere bekannt.

Auf diese Weise können sowohl EVA (JP 01.198 341) aber auch selbst Polyethylene (PE) oder Ethylen/ -Olefin-Copolymere in funktionalisierter Form in PO/PS-Blends eingesetzt werden.

Durch radikalische Pfropfung von vorzugsweise zwischen 0,2 und 5,0 % Maleinsäureanhydrid (MSA) auf S-EB-S in einem Schmelzextruder (US 4.578 429, EP 0389 094) werden funktionalisierte Blockcopolymere mit PS-Endblöcken (20-40 Masse-%) und einem aliphatischen EB-Mittelblock (80-60 Masse-%), der auf Grund seiner "angehängten" (aufgepfropften Bernsteinsäureanhydridgruppen für die verbesserte Adhäsionsfestigkeit verantwortlich ist, hergestellt.

Ein wirksamer Haftvermittler für PO/PS-Blends kann auch durch Pfropfung von EVA auf ein polares Blockcopolymerisat der Zusammensetzung Poly ( (Vinylacetat-co-t.butylperoxyallylcarbonat)-b-Styren ) erhalten werden, wobei das gepfropfte EVA die Verträglichkeit gegenüber dem PO und die PS-Blöcke des recht komplizierten Blockcopolymerisates die Verträglichkeit gegenüber dem nicht-funktionalisiertem PS bewirken (JP 61.011 314).

Gleichermaßen gelingt die chemische Verknüpfung von hydriertem SB und Ethylen/ -Olefincopolymeren über die mittels Acrylsäure oder MSA in unterschiedlichen Reaktionen voneinander erhaltenen pfropfcarboxylierten Komponenten (JP 57 205 440). Die aus beiden funktionalisierten Komponenten bestehende Haftvermittlerkombination wird u.a. in PO/SBR-Zusamensetzungen eingesetzt.

Aus dem Stand der Technik ist erkennbar, daß für eine ausreichende Verträglichmachung und damit der Einstellung von Morphologien, die vor allem ein hohes mechanisches Eigenschaftsniveau in PO/PS-Blends unterschiedlicher Zusammensetzung gewährleisten sollen, Haftvermittler auf Basis von Styren-Dien-Blockcopolymeren der in weiten Grenzen variierbaren Bruttozusammensetzung entsprechend 10 bis 90 Masse-% Styren-/90 bis 10 Masse-% Dieneinheiten verwendet werden. Dabei ist zu unterscheiden, welcher Blockcopolymer) strukturtyp bzw. in welcher "chemisch modifizierten" Form das Blockcopolymerisat zum Einsatz gelangt.

Die mit vorstehend beschriebenen Haftvermittlern auf Basis von Styren-Dien-Blockcopolymeren, einschließlich in ihrer funktionalisierten Form oder in Kombination mit einer anderen Polymerkomponente, ausgerüsteten PO/PS-Blends weisen immer noch erhebliche Nachteile in bezug auf wichtige mechanische Kennwerte, insbesondere das für zahlreiche Anwendungsfälle unzureichende Zähigkeits-Steifigkeits-Niveau, auf.

Des weiteren ist festzustellen, daß ein für unterschiedliche Blendkomponenten und -zusammensetzungen universell wirkender Verträglichkeitsvermittler nicht bekannt ist.

Die in den meisten Fällen vorgeschlagenen verschiedenen nicht-funktionalisierten radialen Blockcopolymerisate, insbesondere solche mit einem hohen Anteil an Styreneinheiten (> 40 Masse-%) sowie die mit einem hohen zusätzlichen Hydrieraufwand erhaltenen gesättigten Blockcopolymeren, bewirken nur einen geringen Anstieg der wesentlichen Blendeigenschaften. Durch ihren Zusatz werden das mechanische Kennwertniveau, die verarbeitungs- und vor allem solche anwendungstechnischen Eigenschaften, wie Tiefzieh- und Heißsiegelfähigkeit, Wasserdampf- und Lösungsmittelundurchlässigkeit, Wärmeformbeständigkeit u.a., immer nur graduell sowie speziell für jeweils eine ganz bestimmte PO/PS-Blendzusammensetzung unter konkreter Festlegung der polyolefinischen bzw. styrenpolymerhaltigen Hauptkomponente verbessert.

Auch die Verwendung von bekannten Kombinationen aus nicht-funktionalisierten Blockcopolymeren und einem statistischen Copolymerisat, wie EVA (JP 60.158 235, JP 62.169 879), oder mittels Aufpfropfen von MSA erhaltenen funktionalisierten (carboxylierten/maleinisierten) selektiv hydrierten Styren-Dien-Blockcopolymeren (US 4.578 429, EP 0389 094) sowie von komplizierteren pfropfmodifizierten Blockcopolymerisaten (JP 61.011 314, JP 57.205 440) führt nur zu eng begrenzten Eigenschaftsverbesserungen.

Der hohe technisch-technologische und somit wirtschaftliche Aufwand für die Herstellung dieser Haftvermittler ist unter Zugrundelegung der erreichbaren Anhebung des Eigenschaftsniveaus sowie Verbesserung der Verarbeitbarkeit der mit diesen Verträglichkeitsvermittlern ausgerüsteten PO/PS-Blends nicht gerechtfertigt.

Die Aufgabe der Erfindung besteht daher in der Entwicklung von PO/PS-Blends mit verbesserter Zähigkeit und für ein breites Einsatzgebiet, insbesondere technische Spritzgußteile und Folien, erforderlichem Festigkeits-Steifigkeits-Niveau, hoher Wärmeformbeständigkeit sowie einer gegenüber der polyolefinischen Hauptkomponente verbesserten Verarbeitbarkeit, vorzugsweise bei der Extrusion, Kalandrierung und beim Tiefziehen, auf der Grundlage einer auf die Formmasse aus A + B + C bezogenen Zusammensetzung:
A 30 bis 90 Massenteile Polyolefin aus der Reihe der Ethylen- und/oder Propylenhomopolymeren sowie der aus überwiegend Ethylen- und/oder Propylenmonomereinheiten aufgebauten Mischpolymeren;
B 8 bis 60 Massenteile Styrenpolymerisat aus der Reihe der Styrenhomo- und/oder -mischpolymeren, einschließlich Styrenpfropfpolymeren bzw. Styrenpolymercompounds unter Verwendung von 1,4-cis-Polybutadien (BR) und/oder elastomeren statistischen Styren-Butadien-Copolymerisaten (SBR) oder anderen Dien- oder Acrylatkautschuken als Pfropfrückgrat für Styren bzw. Compoundbestandteil für PS, und
C 2 bis 30 Massenteile eines durch anionische Lösungspolymerisation hergestellten und gegebenenfalls nachträglich selektiv hydrierten Styren-Dien-Blockcopolymerisates in einer Zusammensetzung aus 10 bis 90 Masse-% Styren- und 90 bis 10 Masse-% (gegebenenfalls hydrierten) Dieneinheiten mit massenmittleren Molekulargewichten MW von 50 000 bis 300 000, das zusätzlich funktionalisiert worden ist.

Erfindungsgemäß wird die Aufgabe dadurch gelöst, daß C ein pfropfcarboxyliertes Blockcopolymerisat mit einem Gehalt an Carboxyl- und/oder Säureanhydridgruppen zwischen 0,1 und 5,0 Masse-%, vorzugsweise zwischen 0,5 und 4,0 Masse-%, sowie einem Gelmassengehalt von 0 bis 95 % ist und A zu einem Anteil von 3 bis 50 Masse-%, vorzugsweise von 5 bis 40 Masse%, ein Ethylen-Vinylacetat-Copolymerisat (EVA) der Zusammensetzung 5 bis 40 Masse-% Vinylacetat-/95 bis 60 Masse-% Ethyleneinheiten, vorzugsweise 10 bis 30 Masse-% Vinylacetat-/90 bis 70 Masse-% Ethyleneinheiten, mit einer Dichte zwischen 0,90 und 0,94 g/cm³ darstellt und beide Komponenten in einem massenprozentualen Verhältnis C zu EVA von 90 zu 10 bis 10 zu 90, vorzugsweise von 80 zu 20 bis 20 zu 80, vorliegen.

Die erfindungsgemäß zum Einsatz kommenden funktionalisierten Blockcopolymerisate sind nach den bekannten Pfropf- bzw. Maleinisierungsverfahren, wie z. B. Technologien, die in einem organischen Lösungsmittel oder unter Schmelzereaktionsbedingungen (Extruder) durchgeführt werden, herstellbar. Günstigerweise werden die funktionalisierten Blockcopolymere aber mittels radikalischer Festphasenpfropfung von , β-ethylenisch ungesättigten Mono- und/oder Dicarbonsäuren bzw. ihren Anhydriden, vorzugsweise Acrylsäure, Methacrylsäure, MSA und Anhydriden anderer α, β-ethylenisch ungesättigter Dicarbonsäuren (Carboxylmonomere), gegebenenfalls unter Verwendung von säureanhydrid- und carboxylgruppenfreien unpolaren oder polaren Comonomeren, vorzugsweise Styren oder Methylmethacrylat, auf das in pulveriger und/oder krümeliger und/oder körniger/granularer und/oder schuppen- bzw. blättchenförmmiger Konsistenz eingesetzte Blockcopolymer-Rückgrat unter Verwendung organischer peroxidischer und/oder diazogruppenhaltiger Initiatoren im Temperaturbereich zwischen 40 und 100°C (Festphasenpfropfung) erzeugt.

Gegenüber anderen Pfropfpolymerisationsverfahren, insbesondere Schmelze- und Lösungspfropftechnologien, zeichnet sich die Festphasenpfropfung durch hohe Universalität, Wirtschaftlichkeit und Effizienz (hohe Pfropfausbeute und hoher Pfropfungsgrad) aus. Das drückt sich dadurch aus, daß die in bezug auf Struktur, Zusammensetzung, einschließlich Hydriergrad bzw. Restungesättigtheit, und Konstitution unterschiedlichen Blockcopolymerisate - ohne sichtbaren Molekulargewichtsabbau - mittels "schonender" Pfropfcarboxylierung unter Sicherung von Pfropfausbeuten > 80 % und Pfropfungsgraden im allgemeinen > 1,0 % gepfropftes Carboxylmonomer, bezogen auf die Blockcopolymer-Rückgratmasse, auf einfache technisch-technologische Weise funktionalisierbar sind.

Der erfindungsgemäße Einsatz der pfropfcarboxylierten Blockcopolymeren mit den oben genannten Massenanteilen in der Kombination mit EVA in gleicher Größenordnung, entsprechend bevorzugten Massenverhältnissen zwischen beiden Komponenten von 1 zu 4 bis 4 zu 1, sichert sowohl den insgesamt höchsten Kennwertniveauanstieg sowie eine verbesserte Verarbeitbarkeit, vor allem eine hohe Tiefziehfähigkeit der aus den erfindungsgemäß modifizierten Formmassen hergestellten Folien.

Die Herstellung der Formmassen erfolgt im allgemeinen durch Mischen der Einzelkomponenten A, B, C und gegebenenfalls weiterer bekannter Zusatzstoffe (Komponente D) in der Schmelze unter Verwendung der dafür üblichen Methoden und Vorrichtungen. Dabei hat sich als eine bevorzugte Variante die in der Schmelze vorgenommene "reaktive" Vormischung des carboxylierten Blockcopolymerisats mit EVA, die entweder separat, z.B. in einem Extruder, oder in einer der eigentlichen Schmelzemischung der drei Grundkomponenten A + B + C vorgeschalteten Stufe, z. B. im ersten Extruderabschnitt, durchgeführt werden kann, erwiesen.

Ausgehend von der Betrachtung, daß der Einsatz eines Polyolefinmindestanteils in Form von aus überwiegend Ethyleneinheiten aufgebauten Ethylen-Vinylacetat-Copolymerisaten - bei Einhaltung eines insgesamt konstanten Polyolefinanteils - sich in einer deutlichen Erhöhung der Zähigkeit unter Aufrechterhaltung hoher Steifigkeitswerte sowie der anderen anwendungs- und verarbeitungstechnischen Parameter niederschlägt, wird die überraschende Wirkung des Haftvermittlers gegenüber der alleinigen Verwendung der carboxylierten Blockcopolymerisate, d. h., ohne EVA-Zusatz, deutlich.

Diese synergistische Wirkung tritt hervor bei Verwendung von carboxylierten Styren-Butadien-Dreiblockcopolymeren mit einem Gesamtpolystyrengehalt von 10 bis 90 Masse-%, insbesondere von 40 bis 80 Masse-%, in Kombination mit EVA entsprechend oben genannten Massenverhältnissen bei einem Gesamtanteil dieser Kombination von 5 bis 40 %, vorzugsweise von 10 bis 20 Masse%, bezogen auf den Gesamtpolymergehalt A + B + C.

### Komponente A

Als Komponente A der erfindungsgemäßen Formmasse sind zu verstehen:
- Homopolymerisate des Ethylens, wie lineares Polyethylen mit niedriger bzw. sehr oder äußerst geringer Dichte (LLDPE mit Dichte < 0,94 g/cm³ bzw. VLDPE mit Dichte < 0,91 g/cm³ oder ULDPE mit Dichte < 0,90 g/cm³),
   verzweigtes Polyethylen mit niedriger Dichte < 0,94 g/cm³ (LDPE) und Polyethylen hoher Dichte > 0,94 g/cm³ (HDPE), innerhalb eines Bereiches der viskosimetrisch bestimmten massenmittleren Molmassen M_{W} zwischen 25000 und 2.500 000, vorzugsweise M_{W} zwischen 40 000 und 300 000, sowie Schmelzindices von MFI (190/21,6) = 1 g/10 min. bis MFI (190/2,16) = 50 g/10 min., vorzugsweise von MFI (190/21,6) = 3 g/10 min. bis MFI (190/2,16) = 20 g/10min.
- Homopolymerisate des Propylens, insbesondere isotaktische Polypropylene mit einem Isotaxie-Index (als Lösungsrückstand in siedendem Heptan bestimmt) von 50 bis 99 %, einer Dichte zwischen 0,90 und 0,95 g/cm³, M_{W} zwischen 25 000 und 500 000, vorzugsweise M_{W} zwischen 50 000 und 300 000, sowie MFI (190/5,0) von 0,1 bis 50 g/min.
- Ethylen- und/oder Propylenmischpolymere, die Ethylen- und/oder Propyleneinheiten im Überschuß sowie C₄- bis C₁₂-Olefin- und/oder - Dienmonomereinheiten im Unterschuß enthalten, vorzugsweise Ethylen-Propylen-Copolymere (EPM) bzw. Ethylen-Propylen-Dien-Terpolymere (EPDM), oder weitere ,β-ethylenisch ungesättigte Monomereinheiten, insbesondere Vinylacetat-, Acrylat- bzw. Methacrylateinheiten, im Unterschuß aufweisende Ethylen- und/oder Propylenco- bzw. -terpolymere, einschließlich EVA der Zusammensetzung 60 bis 95 Masse-% Ethylen-/40 bis 5 Masse-% Vinylacetateinheiten (VAC), mit Molmassen M_{W} zwischen 50 000 und 300 000, vorzugsweise zwischen 80 000 und 200 000, sowie Schmelzindices MFI (190°C, 2,16 kg) zwischen 0,1 und 50 g/min, vorzugsweise zwischen 0,5 und 20 g/10 min, als erfindungsgemäß notwendiger Bestandteil der Formmasse A + B + C.

### Komponente B

Als Komponente B der erfindungsgemäßen Formmasse sind zu verstehen:
- Homopolymere von Styren (PS) oder seinen methylsubstituierten Derivaten, vorzugsweise α-Methyl- und/oder p-Methylstyren (PMS), oder den aus Styren und Methylstyren gebildeten Copolymeren, herstellbar nach den bekannten Styrenpolymerisationsverfahren;
- Compounds aus einem überwiegenden Anteil PS bzw. PMS und in dispergierter Form im Unterschuß vorliegendem Anteil BR und/oder SBR oder die durch Pfropfpolymerisation von Styren und/oder Methylstyren auf BR und/oder SBR mit einem Polybutadiengehalt zwischen 5 und 20 Masse-% erhaltenen Pfropfprodukte, einschließlich ihrer Abmischungen mit PS und/oder PMS, (HIPS);
- Styrencopolymere mit überwiegenden Styren- und/oder Methylstyreneinheiten und im Unterschuß enthaltenden Acrylnitril (AN) - und/oder Methylmethacrylat (MMA) - oder anderen (Meth-)Acrylateinheiten;
- Mischpolymerisate mittels Pfropfcopolymerisation von Styren und/oder Methylstyren / AN und/oder Methacrylnitril (MAN)-, Styren und/oder Methylstyren / MMA und/oder weitere (Meth-) Acrylsäureester - sowie Styren und/oder Methylstyren / AN (MAN) und/oder MMA - Gemischen auf BR und/oder SBR und/oder einen anderen statistischen Dien- und/oder Acrylatkautschuk, wie besonders ABS, MBS und MABS in den üblichen Zusammensetzungen nach den bekannten Pfropfpolymerisationsverfahren.

### Komponente C

Als Komponente C der erfindungsgemäßen Formmasse kommen die unter Verwendung von Styren-Dien-Blockcopolymerisaten, die hinsichtlich ihrer Struktur und Zusammensetzung in weiten Grenzen variieren können, so daß praktisch alle gegenwärtig kommerziellen Styren-Dien-Blockcopolymer-Typen mit massenmittleren Molekulargewichten M_{W} zwischen 50 000 und 300 000, einschließlich die selektiv hydrierten Typen, als Rückgratpolymer einsetzbar sind, hergestellten funktionalisierten Blockcopolymere mit nachfolgenden Kennwerten in Frage:
. Massenverhältnis Styreneinheiten / Summe aus unhydrierten und hydrierten Dieneinheiten im Blockcopolymerisat zwischen 10 zu 90 und 90 zu 10, vorzugsweise von 20 zu 80 bis 80 zu 20;
. Massenanteil an aufgepfropfter Säure (m_{carb}), d. h., die nach Abtrennung von nicht umgesetzten Monomeren sowie des aus dem Pfropfmonomer bzw. Pfropfmonomergemisch gebildeten Homo- bzw. Copolymeranteils durch Titration ermittelte Menge an gepfropften Carboxylmonomeren (Acrylsäure, MSA u. a.), von 0,2 bis 7,0 Masse-%, vorzugsweise von 0,8 bis 5,0 Masse-%;
. Gelmassengehalt (m_{Gel}), ermittelt als den auf das pfropfcarboxylierte Blockcopolymere bezogenen massenprozentualen Lösungsrückstand einer xylenischen Lösung nach zwölfstündiger Behandlung unter Rückfluß, von praktisch Null bis 95 %, vorzugsweise von 0 bis 70 %;
. Schmelzindices nach DIN 53 735 von MFI (190/21,6) = nicht meßbar (n.m.) bis MFI (190/5) = 20 g/10 min, vorzugsweise n.m. < MFI (190/21,6) < 20 g/10 min.

Die Komponente C kann bevorzugt in Form eines mit EVA "reaktiv gebildeten" Compounds (praktisch als Vormischung für die Formmasse A + B + C) oder auch in getrennter Form, z. B. EVA zusammen mit dem übrigen PO-Anteil, der vorzugsweise unter Schmelzebedingungen herzustellenden Formmasse zugeführt werden.

Die vorteilhaften mechanischen, thermischen und verarbeitungstechnischen Eigenschaften der erfindungsgemäßen Formmasse aus A + B + C sind auf die spezifischen Eigenschaften der - bevorzugt mittels der wirtschaftlichen Festphasenpfropftechnologie herstellbaren - pfropfcarboxylierten Styren - (gegebenenfalls hydrierten) Dien-Blockcopolymeren in ihren "reaktiven" Kombinationen mit EVA zurückzuführen.

Ein weiterer Vorteil besteht in der breiten Anwendbarkeit der erfindungsgemäßen Haftvermittlerkombination hinsichtlich Variabilität der einzusetzenden PO- und PS-Hauptkomponenten.

### Komponente D

Die erfindungsgemäße Formmasse kann als Komponente D übliche Zusatzstoffe, die für die Komponenten A, B und C gebräuchlich sind, enthalten. Solche Zusatzstoffe können aus der breiten Palette bekannter Füllstoffe, Farbstoffe, Pigmente, Antioxidantien, Antistatika, Flammschutzmittel, Gleitmittel und anderer Verarbeitungshilfsstoffe ausgewählt werden.

### Herstellung der Formmasse

Die Herstellung der Formmasse erfolgt durch Mischen der Einzelkomponenten A, B, C und eventuell D, gegebenenfalls unter Berücksichtigung der oben genannten "reaktiven" Vormischung von C mit EVA, nach allen bekannten Methoden, wobei das gemeinsame Kneten und Extrudieren der Komponenten bei höheren Temperaturen, insbesondere in der Schmelze in einem Ein- oder Mehrwellenkneter bzw. -extruder, bevorzugt ist.

Die erfindungsgemäße Formmasse ist nach den bekannten Verfahren der Thermoplastverarbeitung, insbesondere durch Extrudieren, Spritzgießen, Kalandrieren und Hohlkörperblasen, verarbeitbar. Bevorzugt werden aus den erfindungsgemäßen Formmassen Folien durch Extrusion, die hervorragend für das Tiefziehen geeignet sind, sowie verschiedene technische Spritzgießartikel hergestellt.

### Ausführungsbeispiel

Einem Doppelschneckenextruder vom Typ ZSK 30 der Werner & Pfleiderer GmbH wurden über Dosierwaagen die Komponenten A (ohne EVA), B und die in Form einer reaktiven Vormischung in der Schmelze aus C und EVA hergestellten Haftvermittlerkombinationen entsprechend der einzustellenden Blendzusammensetzung zugeführt und bei 210°C, 200 Umdrehungen/min sowie einem Durchsatz von 10 kg/h zu den erfindungsgemäßen Formmassen compoundiert.

In den Tabellen 1 bis 3 sind die verwendeten Komponenten A) Polyolefine (HDPE und PP), einschließlich das für die Haftvermittlerkombination eingesetzte EVA, B) Styrenpolymere (PS, HIPS und ABS) sowie C) funktionalisierte Blockcopolymere als Haftvermittlerkomponente aufgeführt.

Den einzelnen erfindungsgemäßen Formmassen auf Basis verschiedener Kombinationen aus C und EVA werden die mittels nachfolgender Vergleichs-Haftvermittlerkomponenten ausgerüsteten analogen Formmassen mit ihren wichtigsten anwendungstechnischen Kennwerten gegenübergestellt (s. Tabelle 4/5):
- die in Tabelle 3 aufgeführten vier (nicht funktionalisierten) Rückgrat-Blockcopolymeren,
- in Tabelle 3.2 aufgeführte funktionalisierte Blockcopolymerisate (1fd. Nr. 1, 3, 4, 7, 9 und 11).
- EVA (Kennwerte entsprechend Tabelle 1),
- funktionalisiertes EVA unter Verwendung des EVA gemäß Tabelle 1 als Rückgratpolymerisat für die Aufpfropfung von 2,24 Masse-% MSA in trockener Phase, Gelgehalt des pfropfcarboxylierten EVA = 55,7 Masse-% (EVA-carb.),
- Kombinationen aus EVA (Kennwerte entsprechend Tabelle 1) und nicht-funktionalisierten Blockcopolymeren mit 3 verschiedenen Massenverhältnissen (1/1, 2/1 und 1/2) sowie 3 unterschiedlichen Gesamtanteilen innerhalb der gesamten Formmasse (10, 15 und 20 Masse-%),
- Kombinationen aus EVA-carb. und nicht-funktionalisierten Blockcopolymeren mit 3 verschiedenen Massenverhältnissen (1/1, 2/1 und 1/2).

Entsprechende Kombinationen aus EVA-carb. und pfropfcarboxylierten Blockcopolymeren wurden nicht mit angegeben, da die Kennwerte fast mit den aus EVA-carb. und nicht funktionalisierten Blockcopolymeren identisch waren.

Die Vergleichs-Haftvermittler-Kombinationen wurden auf gleiche Weise wie die erfindungsgemäßen Kombinationen in Form ihrer Schmelzecompounds dem Extruder zugeführt.

In Tabelle 5 sind für die in Tabelle 4 aufgeführten PO/PS-Blend-Zusammensetzungen, einschließlich Zusammensetzungen ohne jeglichen Haftvermittler (lfd. Nr. 0.1 ... 0.26) sowie jeder erfindungsgemäßen Formmasse (lfd. Nr. 1 ... 27) eine Vergleichs-Formmasse mit einem (nicht erfindungsgemäßen) Haftvermittler gegenübergestellt (lfd. Nr. V.1 . . . V.27), charakteristische, die erfindungsgemäße Lösung stützende Kenngrößen angegeben. Folgende Kennwerte wurden ermittelt.
- Schlagzähigkeit an bei -20°C und die Kerbschlagzähigkeit aₖ bei + 23°C und -20°C (DIN 53 453)
- Elastizitätsmodul (Biegeversuch) E_{b} (DIN 53 457)
- Wasserdampfdurchlässigkeit D_{DW} (DIN 53 122)
- maximale Ziehtiefe T_{Zm} (vergleichende Methode BUNA AG), bestimmt mittels Vakuum-Negativ-Verfahren ohne Vorstreckung (Tiefziehmaschine mit zylindrischen Becher mit 10 cm - Durchmesser) an Folien einer Stärke von 0,9 mm und einer Breite von 275 mm (freie Folienfläche von 220 mm x 220 mm im Spannrahmen), wobei die Ziehtiefe bis zum Auftreten der ersten Risse in Bodennähe vermessen wurde.

Für eine Reihe weiterer wichtiger Eigenschaften, wie 3,5 %-Biegespannungen b 3,5 (DIN 53 452), Streckspannungen (50 mm/min) _{S} (DIN 53 455), Kugeleindruckhärten (30 s) H_{K(30)} (DIN 53 456) und Vicat-Erweichungstemperaturen nach Verfahren B (50 N) bei einer Heizrate 50 K/h VST B 50 (DIN ISO 306), an ISO-Prüfkörpern gemessen, sowie Schmelzindices MFI (200 °C/5 kg Auflagegewicht) nach DIN 53 735, am Formmassengranulat ermittelt, wurden ausreichende Kennwerte erhalten, wobei sich keine gravierenden Unterschiede zwischen den erfindungsgemäßen und den Vergleichs-Formmassen ergaben, wie es durch nachfolgende Durchschnitts-Kennwerte für repräsentative Formmassen (in Masse-%) 60 HDPE bzw. 60PP/20 PS/20 Haftvermittler ausgewiesen wird:

| | | |
|---|---|---|
| δb 3,5 | 30 N/mm² bzw. | 33 N/mm² |
| δS | 25 N/mm² bzw. | 28 N/mm² |
| H_{K(30)} | 50 N/mm² bzw. | 58 N/mm² |
| VST B 50 | 70°C bzw. | 85°C |
| MFI (200/5) | 7,0 g/10 min bzw. | 5,5 g/10 min |

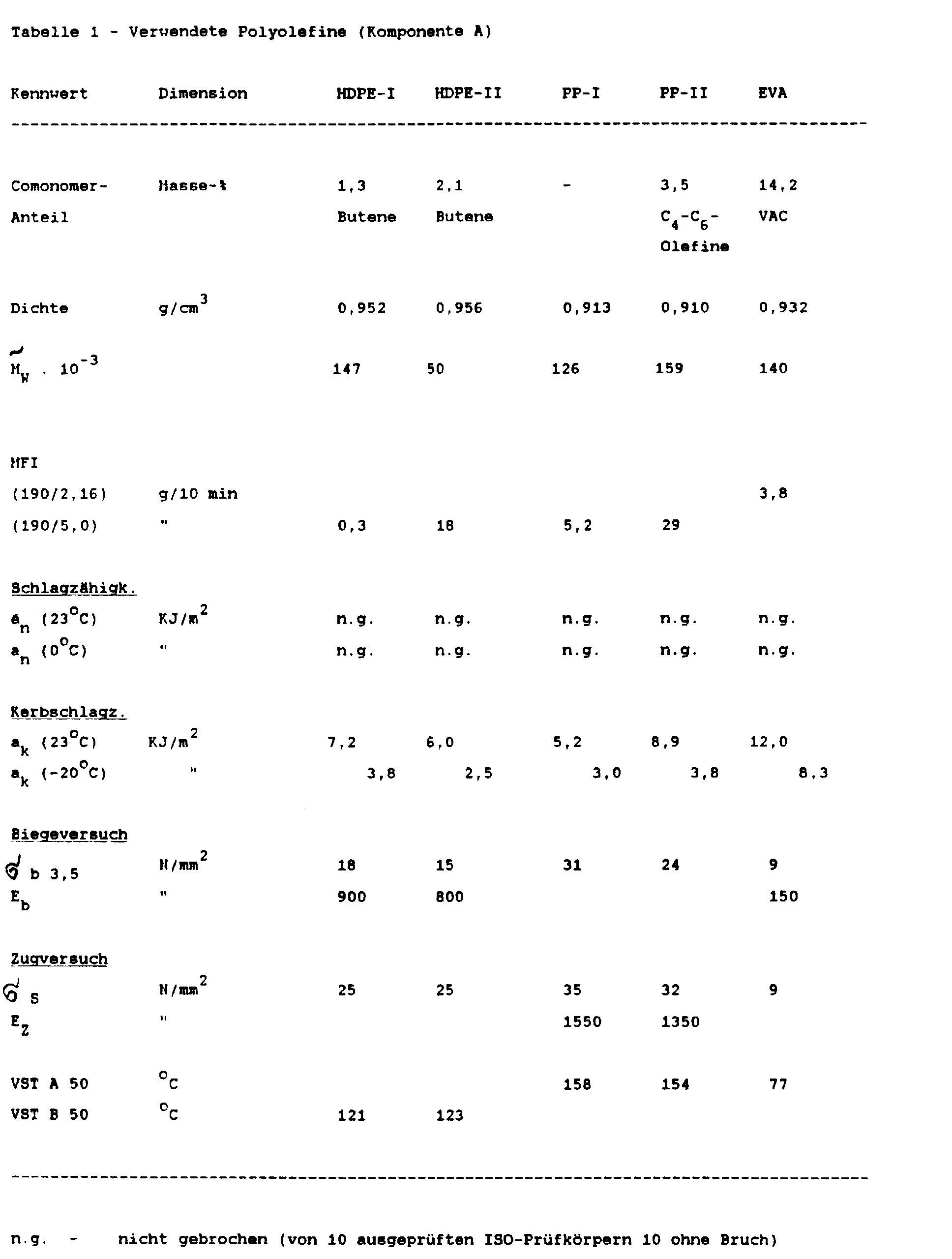

**Tabelle 2 -**

| Verwendete Styrenpolymere (Komponente B) | | | | | |
|---|---|---|---|---|---|
| Kennwert | Dimension | PS-I | PS-II | HIPS | ABS |
| Nicht-Styren- | Masse-% | - | - | 8,1 | 19,2 BR |
| Anteil | | | | Polybutadien | 27,0 AN |
| | | | | | |
| Dichte | g/cm³ | 1,07 | 1,08 | 1,03 | 1,05 |
| K-Wert | | 60 | 70 | | |
| | | | | | |
| MFI | | | | | |
| (200/5,0) | g/10 min | 10 | 5 | 10 | |
| (200/21,6) | g/10 min | | | | 28 |
| | | | | | |
| Schlagzähigk. | | | | | |
| aₙ (23°C) | KJ/m² | 28 | 36 | n.g. | n.g. |
| aₙ(-20°C) | KJ/m² | 25 | 30 | n.g. | n.g. |
| | | | | | |
| Kerbschlagz. | | | | | |
| aₖ (23°C) | KJ/m² | 2,0 | 2,7 | 9,5 | 19,2 |
| aₖ(-20°C) | KJ/m² | 1,7 | 2,1 | 7,8 | 11,3 |
| | | | | | |
| 3,5 % Biegespannung | | | | | |
| b 3,5 | N/mm² | 85 | 88 | 42 | 58 |
| | | | | | |
| Streckspannung | | | | | |
| (50 mm/min) ₛ | N/mm² | 46 | 57 | 23 | 41 |
| | | | | | |
| Zug-E-Modul | | | | | |
| E_{z} | N/mm² | 2980 | 3200 | 1750 | 1900 |
| | | | | | |
| VST B 50 | °C | 95 | 102 | 83 | 97 |

n.g. - nicht gebrochen

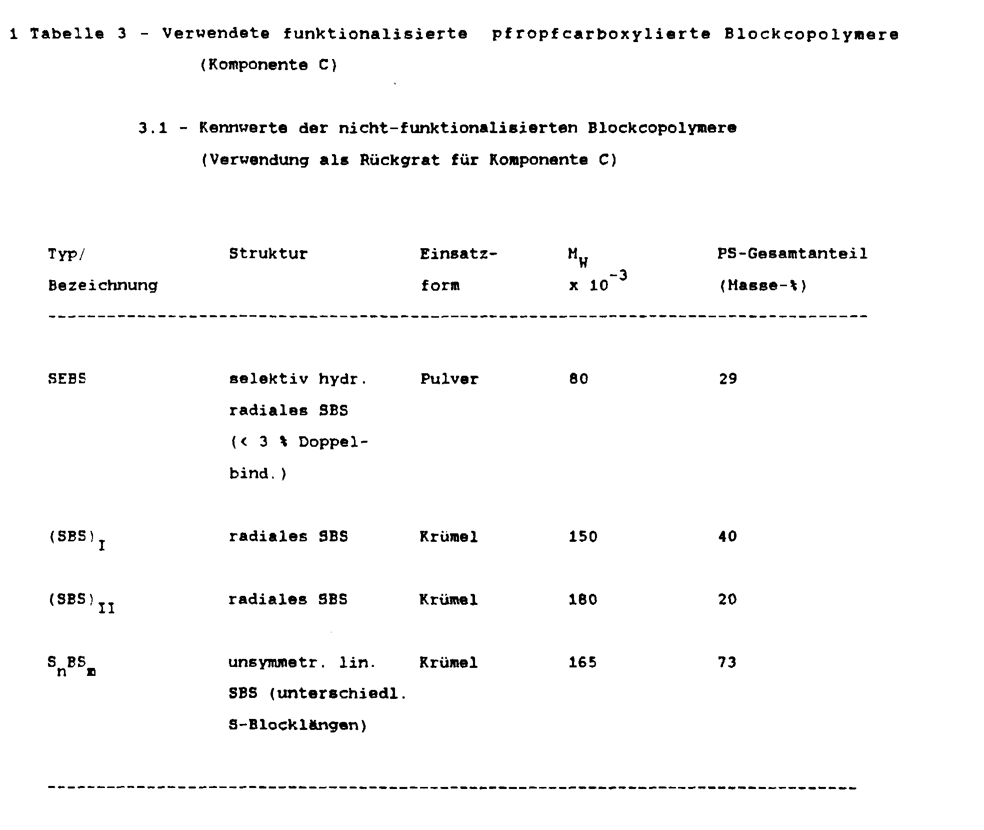

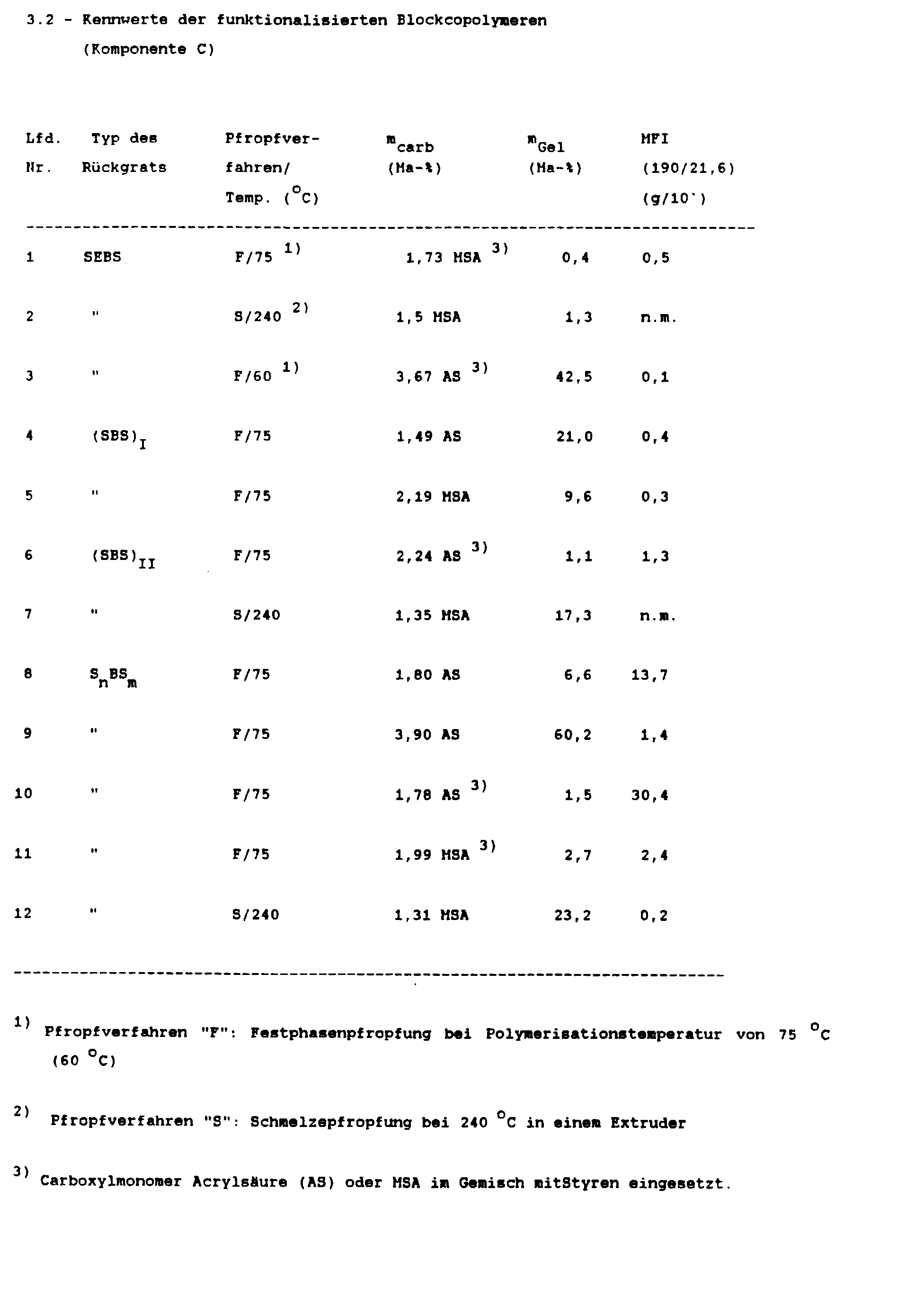

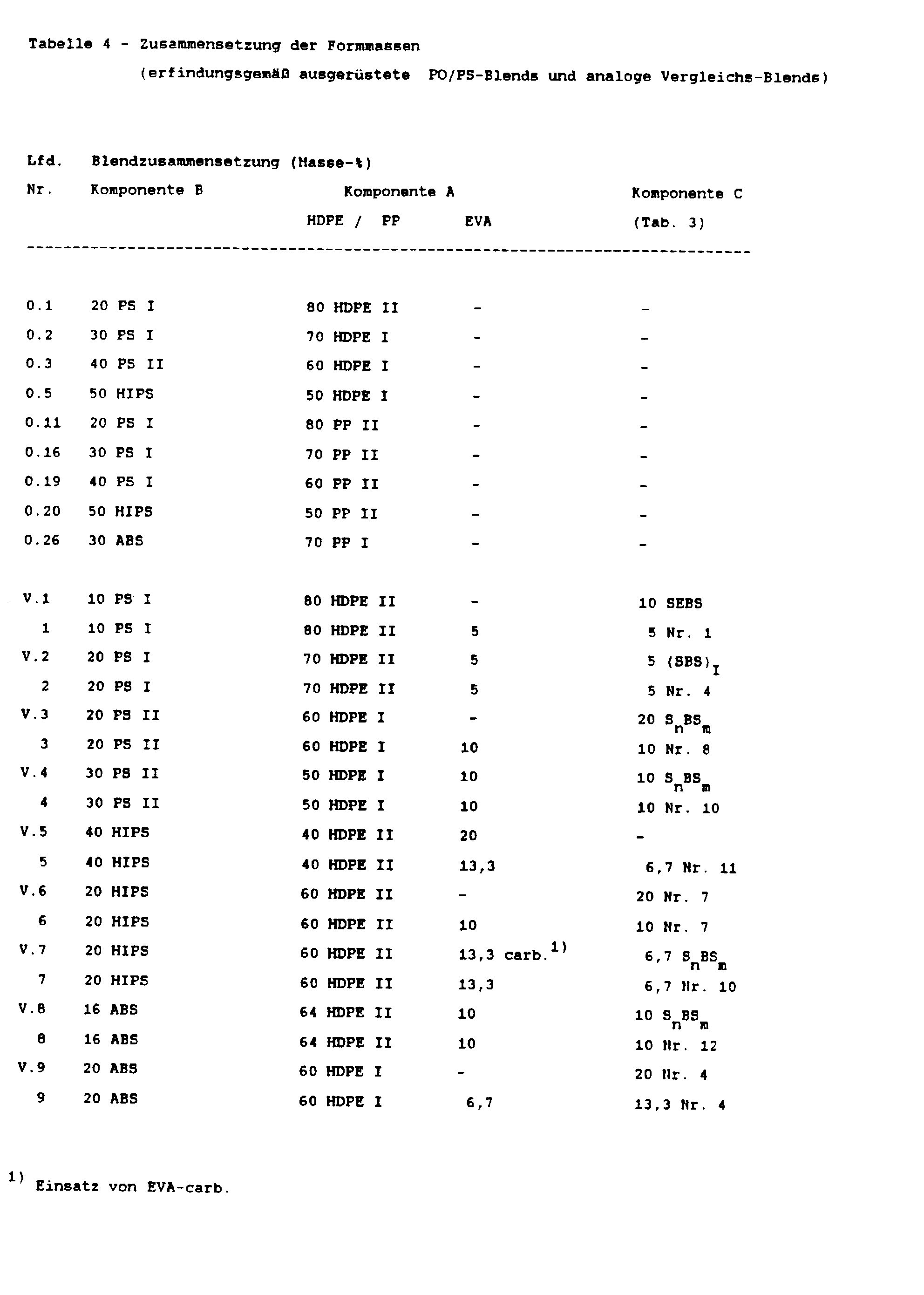

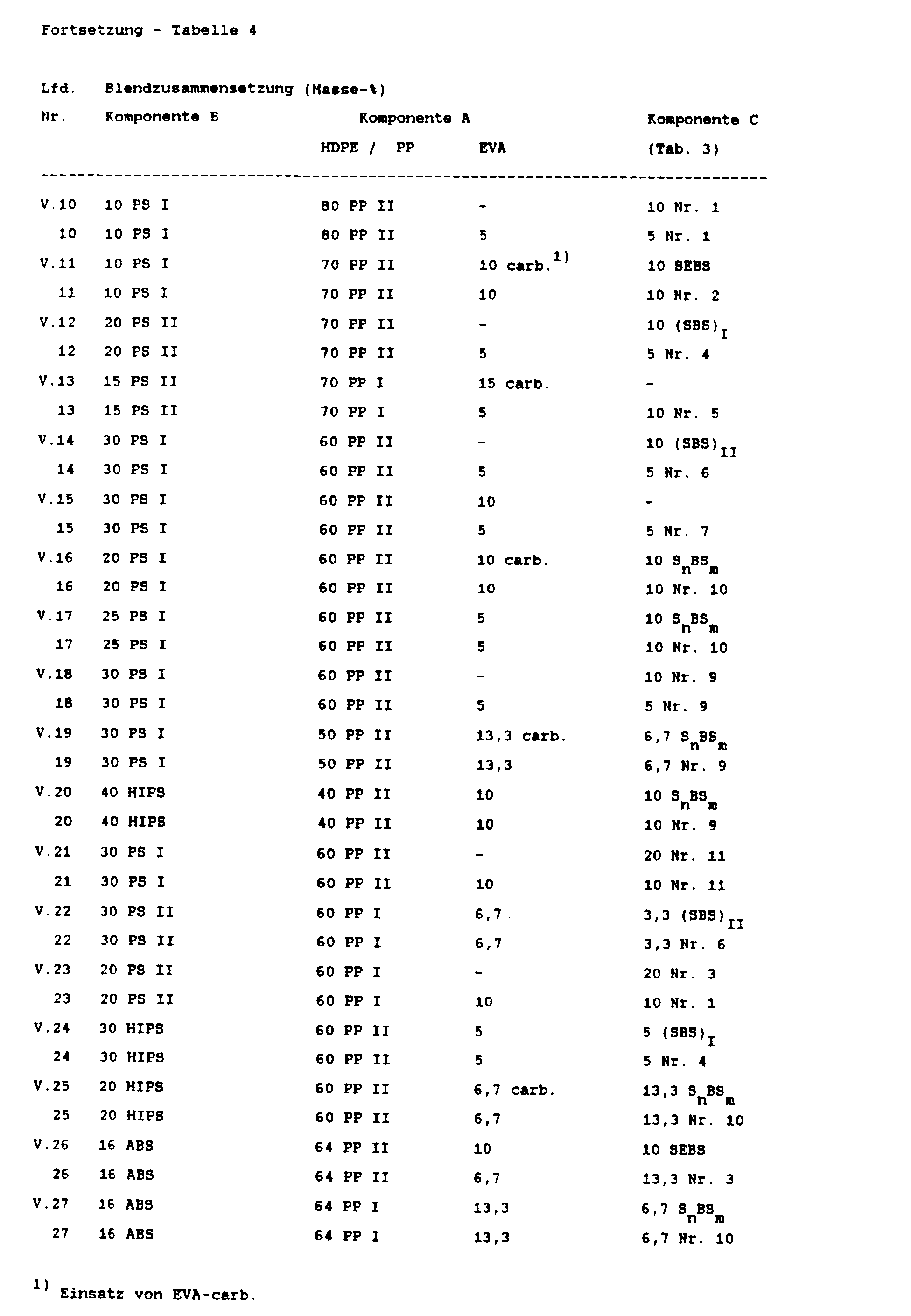

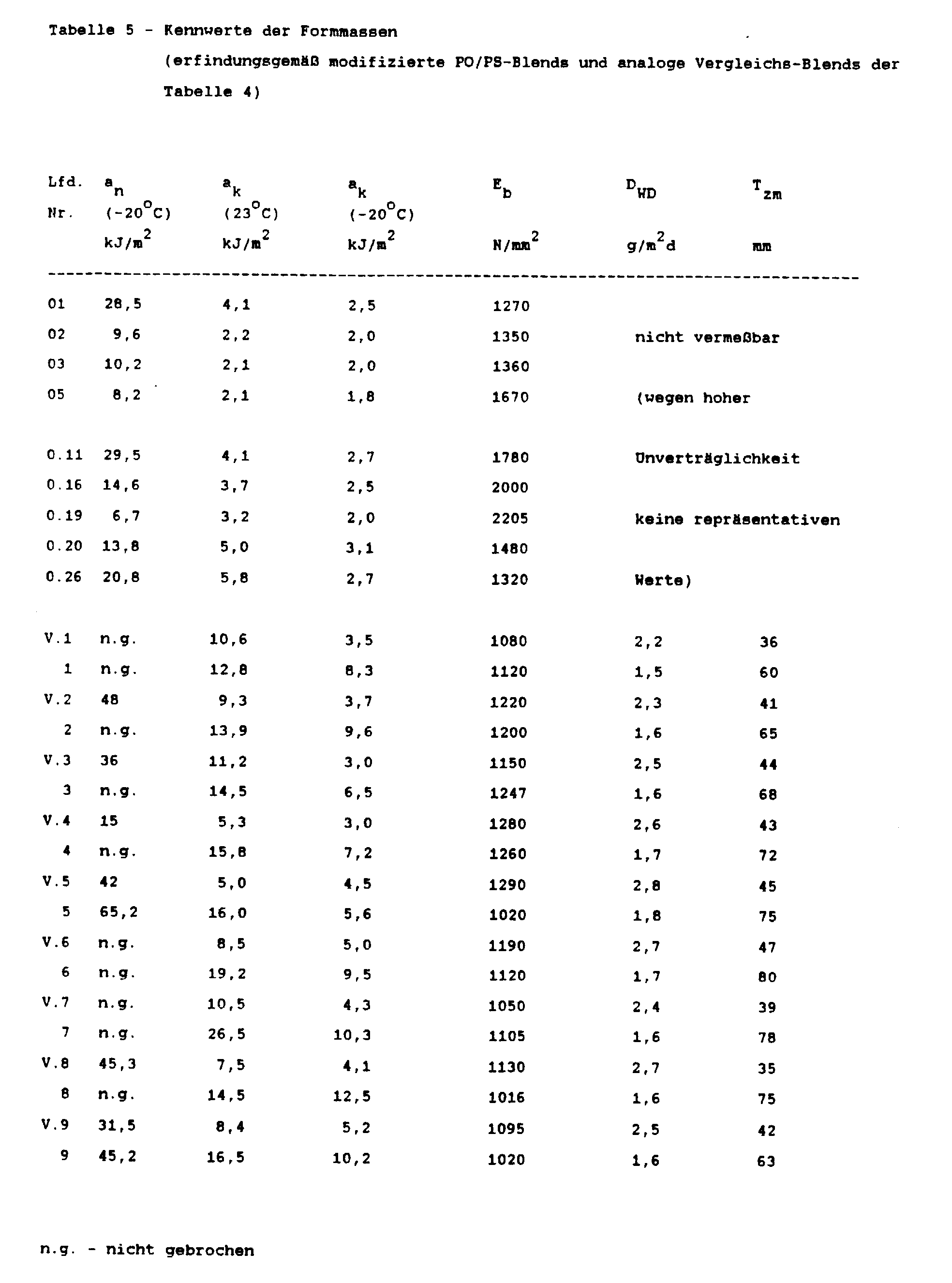

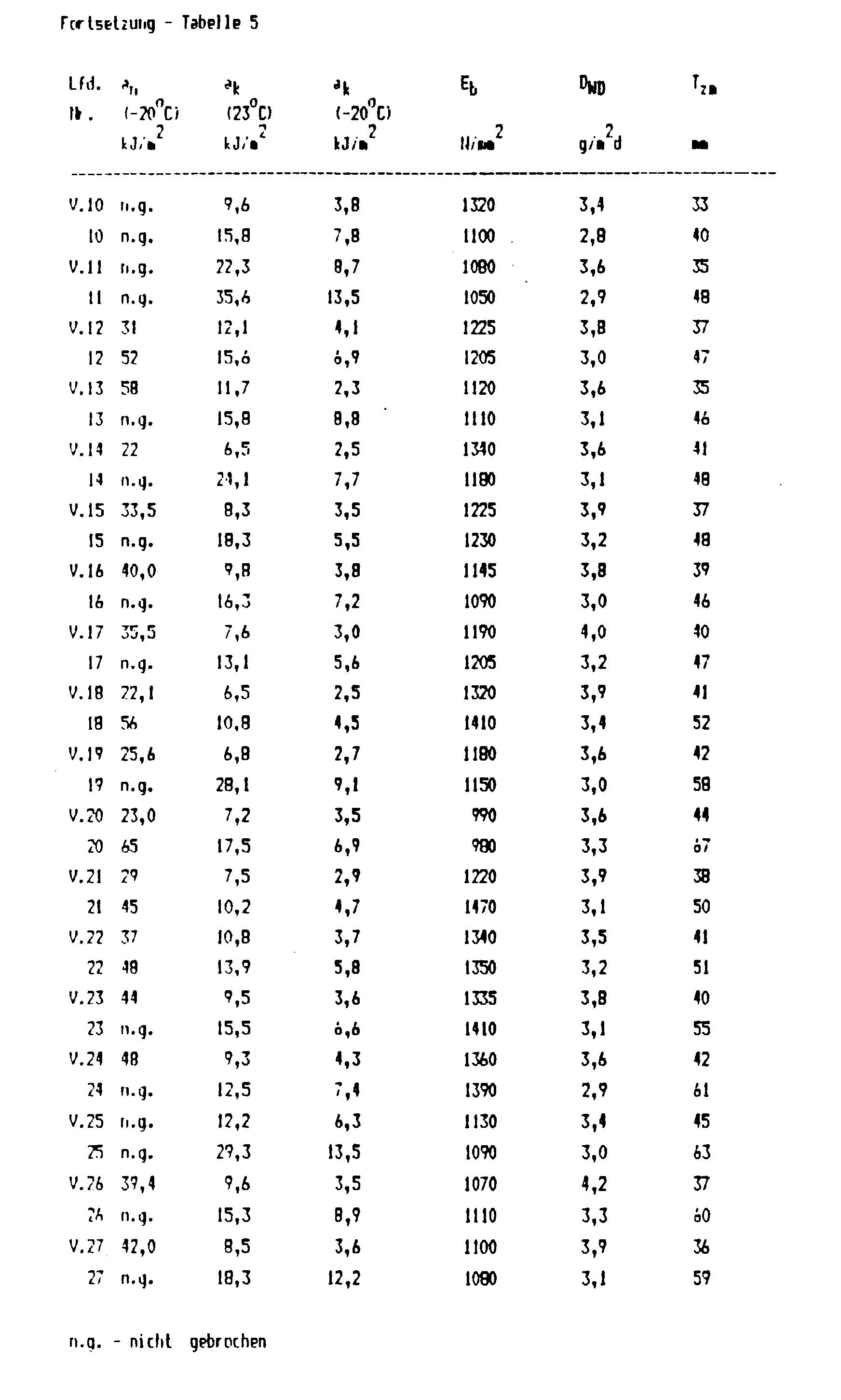

## Patentansprüche

1. Thermoplastische Formmasse, enthaltend, jeweils bezogen auf die Formmasse aus A + B + C,
A) 30 bis 90 Massenteile Polyolefin aus der Reihe der Ethylen- und/oder Propylenhomopolymeren sowie der aus überwiegend Ethylen- und/oder Propylenmonomereinheiten aufgebauten Mischpolymeren,
B) 8 bis 60 Massenteile Styrenpolymerisat aus der Reihe der Styrenhomo- und/oder -mischpolymeren, einschließlich Styrenpfropfpolymeren bzw. Styrenpolymercompounds unter Verwendung von 1,4-cis-Polybutadien und/oder elastomeren statistischen Styren-Butadien-Copolymerisaten oder anderen Dien- oder Acrylatkautschuken als Pfropfrückgrat für Styren und Styren-Comonomer-Mischungen bzw. Compoundbestandteil für Polystyren und
C) 2 bis 30 Massenteile eines durch anionische Lösungspolymerisation hergestellten und gegebenenfalls nachträglich selektiv hydrierten Styren-Dien-Blockcopolymerisates in einer Zusammensetzung aus 10 bis 90 Masse-% Styren- und 90 bis 10 Masse-% Dien- und/oder hydrierten Dieneinheiten mit massenmittleren Molekulargewichten M_{W} von 50 000 bis 300 000, in funktionalisierter Form,
gekennzeichnet dadurch, daß C ein pfropfcarboxyliertes Blockcopolymerisat mit einem Gehalt an Carboxyl- und/oder Säureanhydridgruppen zwischen 0,1 und 5,0 Masse-% sowie einem Gelmassengehalt von 0 bis 95 % ist und A zu einem Anteil von 3 bis 50 Masse-% ein Ethylen-Vinylacetat-Copolymerisat (EVA) der Zusammensetzung 5 bis 40 Masse-% Vinylacetat - /95 bis 60 Masse-% Ethyleneinheiten mit einer Dichte zwischen 0,90 und 0,94 g/cm3 darstellt und beide Komponenten in einem massenprozentualen Verhältnis C zu EVA von 90 zu 10 bis 10 zu 90 vorliegen.

2. Thermoplastische Formmasse nach Anspruch 1, gekennzeichnet dadurch, daß C einen Carboxyl- und/oder Säureanhydridgruppengehalt zwischen 0,5 und 4,0 Masse-% enthält.

3. Thermoplastische Formmasse nach den Ansprüchen 1 und 2, gekennzeichnet dadurch, daß A zu einem Anteil von 5 bis 40 Masse-% EVA enthält.

4. Thermoplastische Formmasse nach den Ansprüchen 1 bis 3, gekennzeichnet dadurch, daß C und EVA in einem massenprozentualen Verhältnis von 80 zu 20 bis 20 zu 80 vorliegen.

5. Thermoplastiche Formmasse nach den Ansprüchen 1 bis 4, gekennzeichnet dadurch, daß sie ein mittels radikalischer Festphasenpfropfung von α, β-ethylenisch ungesättigten Mono- und/oder Dicarbonsäuren bzw. ihren Anhydriden auf pulverige, körnige, krümelige, schuppen- oder blättchenförmige unhydrierte und/oder selektriv hydrierte Styren-Dien-Blockcopolymere bei Temperaturen zwischen 40 und 100°C hergestelltes funktionalisiertes Blockcopolymerisat als Komponente C enthält.

6. Thermoplastische Formmasse nach Anspruch 5, gekennzeichnet dadurch, daß die als Rückgratpolymerisate für die Herstellung des funktionalisierten Block-Copolymerisates C einen Gesamt-Polystyrengehalt von 40 bis 80 Masse-% und ein massenmittleres Molekulargewicht M_{W} zwischen 80 000 und 200 000 besitzen.

7. Thermoplastische Formmasse nach den Ansprüchen 1 bis 5, gekennzeichnet dadurch, daß C und EVA in Form einer in der Schmelze beider Komponenten gebildeten "reaktiven" Vormischung der Formmasse A + B + C zugesetzt worden ist.

## Claims

1. Thermoplastic moulding compound containing, if related to the moulding compound of A + B + C,
A) 30 to 90 parts by weight of polyolefin out of the ethylene and/or propylene homopolymer family and of the copolymers mainly including ethylene and/or propylene monomer units;
B) 8 to 60 parts by weight of styrene polymer out of the styrene homopolymer and/or styrene copolymer family including styrene graft polymers or styrene polymer compounds using 1,4-cis polybutadiene and/or elastomeric statistic styrene/butadiene copolymers or other diene rubber or acrylate rubber types as grafting backbone for styrene and styrene comonomer compounds or as compound component for polystyrene, and
C) 2 to 30 parts by weight of a styrene/diene block copolymer formed by anionic solution polymerisation and selectively hydrogenated thereafter, if necessary, having a composition of 10 to 90 per cent by weight of styrene and 90 to 10 per cent by weight of diene and/or hydrogenated diene units with a weight-average molecular weight M_{w} of 50,000 to 300,000, functionalised,
characterised in that C is a graft-carboxylated block copolymer containing carboxyl and/or acid anhydride groups of 0.1 and 5.0 per cent by weight and a gel content of 0 to 95 per cent and A containing 3 to 50 per cent by weight of an ethylene/vinylacetate copolymer (EVA) with the composition of 5 to 40 per cent by weight of vinyl acetate units to 95 to 60 per cent by weight of ethylene units with a density between 0.90 and 0.94 g/cm³ and that the C to EVA percentage by weight ratio of the two components is from 90 to 10 upto 10 to 90.

2. Thermoplastic moulding compound according to claim 1 characterised in that C has a content of carboxyl and/or acid anhydride groups between 0.5 and 4.0 per cent by weight.

3. Thermoplastic moulding compound according to claims 1 and 2 characterised in that A includes 5 to 40 per cent by weight of EVA.

4. Thermoplastic moulding compound according to claims 1 to 3 characterised in that the percentage by weight of C to EVA is from 80 to 20 upto 20 to 80.

5. Thermoplastic moulding compound according to claims 1 to 4 characterised in that it includes a functionalised block copolymer as a component C formed by radical solid-phase grafting of α , β-ethylenically unsaturated monocarbolic and/or dicarbolic acids or their anhydrides onto powdery, granular, crumbly, scaly or lamellar unhydrogenated and/or selectively hydrogenated styrene/diene block copolymers at temperatures between 40 and 100 °C.

6. Thermoplastic moulding compound according to claim 5 characterised in that, as backbone polymers for the production of the functionalised block copolymer C, they have a total polystyrene content of 40 to 80 per cent by weight and a weight-average molecular weight M_{W} between 80,000 and 200,000.

7. Thermoplastic moulding compound according to claims 1 to 5 characterised in that C and EVA have been added in the form of a reactive master batch of the moulding compound A + B + C, formed in the melt of the two components.

## Revendications

1. Matière à mouler thermoplastique, contenant, chaque fois en rapport avec la matière à mouler constituée de A + B + C,
A) de 30 à 90 parts en poids de polyoléfine de la série des homopolymères d'éthylène et/ou de propylène ainsi que des copolymères constitués pour l'essentiel d'unités monomères d'éthylène et / ou de propylène,
B) de 8 à 60 parts en poids de polymère de la série des homopolymères et /ou copolymères de styrène, y compris les polymères greffés au styrène ou les compounds de polymères styrène par utilisation de 1,4-cis-polybutadiène et/ ou d'élastomères de copolymères styrène-butadiène statistiques ou d'autres caoutchoucs acryliques ou dièniques en tant que support de greffe pour le styrène et les mélanges comonomères styrène ou de composant compound pour le polystyrène et
C) de 2 à 30 parts en poids d'un copolymère séquencé styrène diène produit par polymérisation en solution anionique et le cas échéant sélectivement posthydrogéné en une composition de 10 à 90 % en masse de styrène et de 90 à 10 % en masse de diène et/ou d'unités hydrogénées de diène avec une masse moléculaire moyenne en poids M_{w} de 50 000 à 300 000 de forme fonctionalisée,
caractérisée par le fait que C représente un copolymère séquencé carboxylé par greffe avec une teneur en groupes carboxyle et/ ou en groupes d'anhydride d'acide entre 0,1 et 5,0 % en poids ainsi qu'une teneur en gel de 0 à 95 % en poids et A en une part de 3 à 50 % en poids un copolymère ethylène acétate de vinyle (EVA) d'une composition de 5 à 40 % en poids d'acétate de vinyle - /de 95 à 60 % en poids d'unités d'éthylène d'une densité de 0,90 à 0.94 g/cm³ et que les deux composants se trouvent dans un rapport proportionnel en poids C envers EVA de 90 à 10 jusqu'à 10 à 90.

2. La matière à mouler thermoplastique selon la spécification 1, caractérisée par le fait que C contient une teneur en groupes carboxyle et ou en groupes d'anhydride d'acide entre 0,5 et 4,0 % en poids.

3. Matière à mouler thermoplastique selon les spécifications 1 et 2, caractérisée par le fait que A contient une part de 5 à 40 % en poids de EVA.

4. Matière à mouler thermoplastique selon les spécifications 1 à 3, caractérisée par le fait que C et EVA se présentent dans un rapport proportionnel de poids de 80 à 20 jusqu'à 20 à 80.

5. Matière à mouler thermoplastique selon les spécifications 1 à 4, caractérisée par le fait qu'elle contient comme constituante C un copolymère séquencé fonctionalisé produit par des températures entre 40 et 100 °C au moyen d'une greffe radicalaire en phase solide d'acides mono et dicarboxyliques éthyléniques α et β non saturés ou de leurs anhydrides sur des copolymères séquencés styrène diène non hydrogénés et ou sélectivement hydrogénés pulvérulents, granulés, grumeleux, lamellaires ou en écailles.

6. Matière à mouler thermoplastique selon la spécification 5, caractérisée par le fait que les polymères de support servant à la fabrication du copolymère séquencé fonctionalisé C contient une teneur totale de polystyrène de 40 à 80 % en masse et une masse moléculaire moyenne en poids M_{w} entre 80 000 et 200 000.

7. Matière moulée thermoplastique selon les spécifications de 1 à 5 caractérisée par le fait que C et EVA ont été ajoutés à la matière à mouler A + B + C sous forme d'un prémélange "réactif" formé dans la masse fondue des deux constituantes.
